# EUROPEAN PATENT SPECIFICATION

(11) **EP 0 546 066 B1**
(45) Date of publication and mention of the grant of the patent: **05.04.1995**
(21) Application number: 91916344.4
(22) Date of filing: 03.09.1991
(51) Int. Cl.: F16F 9/04, B29D 22/00

(54) **IMPROVED MECHANICAL RUBBER PRODUCTS**
MECHANISCHER GEGENSTAND AUS GUMMI
PRODUITS MECANIQUES EN CAOUTCHOUC AMELIORES

(30) Priority: 04.09.1990 GB 9019252
(43) Date of publication of application: 16.06.1993
(73) Proprietor: TBA BELTING LIMITED, Manchester M3 2NL (GB)
(72) Inventor: KULKARNI, Murli, Manchester M25 8AT (GB)
(74) Representative: Crux, John Anthony
(86) International application number: GB9101489
(87) International publication number: WO9204554

(56) References cited:
- DE-C- 438 255
- DE-C- 728 501
- GB-A- 19 293
- GB-A- 485 963

## Description

This invention relates to mechanical rubber products of the kind wherein a rubber component is used to connect metal elements which are otherwise not in contact with one another. Examples of such products include suspension bushes and engine mountings used to prevent or at least limit the transmission of sound and/or vibration between the connected parts.

Where mechanical rubber products are subject to vibration over a wide frequency range, it may be impossible to secure uniform performance with simple constructions. It is possible to secure adequate performance at up to, say, 30 Hz, but in the range 30-300 Hz, a simple rubber component acts more and more like a solid block, due to hysteresis effects. Thus as the frequency increases, the rubber component exhibits high dynamic stiffness resulting in high noise levels.

In order to overcome this, it has been proposed to modify the characteristics of a simple rubber component by the incorporation of hollow chambers which are filled with gas and/or liquid. A simple example of this is GB-A-485963, which discloses a pair of cup-like members of rubber clamped rim-to-rim facing one another to create between them a closed chamber. More complicated and much more recent arrangements are however expensive, since not only do the pockets/chambers have to be formed, but also, it is necessary to fill them with liquid of known, i.e. predetermined characteristics of mass/volume.

It is an object of the present invention to provide an improved mechanical rubber product.

According to this invention, a mechanical rubber product comprises first and second rubber components secured together in superposed relation to define between them at least one closed chamber filled with gas, each of said components having attachment means integral therewith whereby said component can be attached, in use, to associated hardware, and is characterised in that one of said attachment means is in the form of a cup-shaped container from the base of which projects an attachment member such as a bolt, one of said rubber components being moulded in situ in the container. Said one component is preferably wholly contained within said container, so as not to project therefrom. The other of said attachment means preferably comprises a metal plate with a bolt projecting therefrom, the metal plate being incorporated into the rubber during the moulding of the rubber. Preferably, a further, separate metal plate in the form of a flange is incorporated into the same rubber component so as to enable said flange to be attached to the rim of said container to produce an integral unit ready for use as for example an engine mounting. For greater control of stiffness, the other of the attachment means may also be at least partly cup-shaped.

The closed chamber is preferably partly defined in one rubber component and partly in the other rubber component so that on assembling the components together, the chamber portions together constitute a single closed chamber, the joint between the rubber components being itself enclosed by the cup and associated flange. However, it is also possible to mould a solid block in the cup-like container, the cavity (or cavities) being then defined entirely within the other rubber component.

The preferred method of manufacture is by injection moulding. This is particularly convenient as it is relatively simple not only to mould directly onto the attachment means, but also it is possible to form a partial cavity in each component so that on assembly, the cavities will be in alignment to form a single closed chamber. It will be appreciated that several such closed chambers can be formed in a single mechanical rubber product according to this invention. It is therefore possible to adjust the response characteristics over a very wide range, by varying the size, number and disposition of the closed chambers. Preferably the latter are filled with air.

It will be also appreciated that the construction according to this invention is relatively inexpensive, there being no need for unusually complex moulding operations, or for precision filling with one or more liquids.

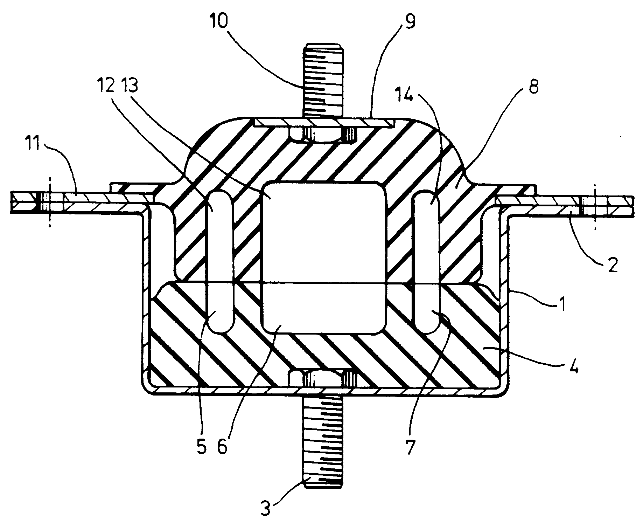

In order that the invention be better understood, a preferred embodiment of it will now be described by way of example with reference to the accompanying drawing in which the sole figure is a cross-sectional side view of a mechanical rubber product according to the invention.

In the figure a cup-shaped metal pressing 1 has an open top surrounded by a flange 2. A mounting bolt 3 projects from the lower face of the pressing 1. The pressing contains a first rubber component 4 formed in situ by injection moulding. The moulding operation was carried out using a tool adapted to produce three open cavities 5, 6 and 7 in the rubber component 4.

A second rubber component, 8 is shown mounted on the pressing 1. This second component was made by injection moulding directly onto a plate 9 from which a second mounting bolt 10 projects. Also included by the same injection moulding operation was an annular metal flange 11 which serves to anchor the two rubber components together in confronting relation to form thereby a single, self-contained unit. The flanges 2 and 11 are secured together by bolting or spot welding or by other means, such as adhesives. A further feature of the second rubber component 8 is the formation of three open cavities 12, 13 and 14 which correspond to the cavities 5, 6 and 7 in component 1. The respective cavities are so disposed that on assembly of the product they co-operate to form three air-filled blind chambers in a single block of rubber constituted by the two rubber components when clamped together as shown in the Figure.

In use, the mounting bolts 3 and 10 are used to install the suspension unit, there being no other connection between these bolts than the rubber components and the closed air-filled chambers defined between them.

The response characteristics of the product are determined by the properties of the rubber components (which need not be the same) and by the size/distribution of the cavities. The selection of these parameters will usually be a matter for relatively simple experiment. However, the arrangement illustrated proved very satisfactory when employed as an automotive engine suspension bush, the damping performance being acceptable over a much wider frequency range than that of a simple rubber bush alone. The cost was not however significantly greater.

## Claims

1. A mechanical rubber product comprising first and second rubber components secured together in superposed relation to define between them at least one closed chamber filled with gas, each of said components having attachment means integral therewith whereby said component can be attached, in use, to associated hardware, characterised in that one of said attachment means is in the form of a cup-shaped container from the base of which projects an attachment member such as a bolt, one of said rubber components being moulded in situ in said container.

2. A product according to claim 1 characterised in that the other of said attachment means comprises a metal plate with an attachment member projecting therefrom, said metal plate being incorporated into the other of said rubber components during moulding thereof.

3. A product according to claim 2 characterised in that the other of said rubber components further includes a separate metal plate in the form of a flange whereby said first and second rubber components can be secured together by attaching said flange to the rim of the container.

4. A product according to any of claims 1-3 characterised in that the closed chamber is partly defined in one rubber component and partly in the other rubber component so that on assembling the components together, the chamber portions together constitute a single closed chamber.

5. A product according to any of claims 1-4, characterised in that the rubber components are formed by injection moulding directly onto/into the attachment means whilst at the same time forming the closed chamber therein as at least one open cavity in at least one of said rubber components.

6. A product according to any of claims 1-5 wherein said closed chamber is filled with air.

## Patentansprüche

1. Mechanisches Gummiprodukt, das ein erstes und ein zweites Gummielement aufweist, die miteinander in einer übereinanderliegenden Weise verbunden sind, um zwischen sich wenigstens eine geschlossene Kammer zu bilden, die mit Gas gefüllt ist, wobei jedes dieser Elemente ein Befestigungsmittel besitzt, das damit eine Einheit bildet, wodurch dieses Element während des Gebrauchs an einer zugeordneten Anlage angebracht werden kann, dadurch gekennzeichnet, daß eines der Befestigungsmittel in der Form eines napfförmigen Behälters ist, von dessen Basis ein Befestigungselement, beispielsweise eine Schraube, hervorragt, wobei eines der Gummielemente in situ in den Behälter geformt ist.

2. Produkt nach Anspruch 1, dadurch gekennzeichnet, daß das andere der Befestigungsmittel eine Metallplatte mit einem davon hervorragenden Befestigungselement aufweist, wobei die Metallplatte in das andere der Gummielemente während des Formens desselben eingeschlossen worden ist.

3. Produkt nach Anspruch 2, dadurch gekennzeichnet, daß das andere der Gummielemente weiterhin eine separate Metallplatte in Form eines Flansches beinhaltet, wobei das erste und das zweite Gummielement durch das Anbringen dieses Flansches an den Rand des Behälters miteinander verbunden werden können.

4. Produkt nach einem der Ansprüche 1 bis 3, dadurch gekennzeichnet, daß die geschlossene Kammer teilweise in dem einen Gummielement und teilweise in dem anderen Gummielement ausgebildet ist, so daß beim Zusammenbau der Elemente die Kammerabschnitte zusammen eine einzige geschlossene Kammer bilden.

5. Produkt nach einem der Ansprüche 1 bis 4, dadurch gekennzeichnet, daß die Gummielemente mittels Spritzgießen unmittelbar auf oder in die Befestigungsmittel geformt sind, während in der gleichen Zeit darin die geschlossene Kammer als wenigstens ein offener Hohlraum in wenigstens einem dieser Gummielemente gebildet wird.

6. Produkt nach einem der Ansprüche 1 bis 5, bei welchem die geschlossene Kammer mit Luft gefüllt ist.

## Revendications

1. Produit mécanique en caoutchouc comprenant une première et une seconde pièces en caoutchouc fixées l'une à l'autre en étant superposées afin de définir entre elles au moins une chambre fermée remplie de gaz, chacune desdites pièces comportant un moyen de fixation d'un seul tenant avec elle de manière que ladite pièce puisse être fixée, à l'utilisation, à un élément de matériel associé, caractérisé en ce que l'un desdits moyens de fixation a la forme d'un récipient en U à la base duquel se projette un élément de fixation tel qu'un boulon, l'une desdites pièces en caoutchouc étant moulée in situ dans le récipient.

2. Produit selon la revendication 1, caractérisé en ce que l'autre moyen de fixation comprend une plaque métallique avec un élément de fixation en projection depuis cette dernière, ladite plaque métallique étant incorporée dans l'autre pièce en caoutchouc durant le moulage de celle-ci.

3. Produit selon la revendication 2, caractérisé en ce que l'autre pièce en caoutchouc comprend en outre une plaque métallique, distincte, sous la forme d'un rebord, de manière que lesdites première et seconde pièces en caoutchouc puissent être fixées l'une à l'autre par fixation dudit rebord à la bordure du récipient.

4. Produit selon l'une quelconque des revendications 1 à 3, caractérisé en ce que la chambre fermée est définie partiellement dans une pièce en caoutchouc et partiellement dans l'autre pièce en caoutchouc de manière qu'à l'assemblage des pièces, les portions de chambre forment conjointement une seule chambre fermée.

5. Produit selon l'une quelconque des revendications 1 à 4, caractérisé en ce que les pièces en caoutchouc sont formées par moulage par injection directement sur/dans les moyens de fixation tandis qu'est formée en même temps la chambre fermée en tant qu'au moins une cavité ouverte dans au moins l'une desdites pièces en caoutchouc.

6. Produit selon l'une quelconque des revendications 1 à 5, dans lequel ladite chambre fermée est remplie d'air.
